# Europäisches Patentamt
## European Patent Office
## Office européen des brevets

(19)

(11) Publication number: **0 027 713**
**B1**

---

(12) **EUROPEAN PATENT SPECIFICATION**

(45) Date of publication of patent specification: **06.07.83**

(51) Int. Cl.³: **A 23 C 19/05**

(21) Application number: **80303627.6**

(22) Date of filing: **14.10.80**

---

(54) Process of manufacturing cheese.

---

(30) Priority: **19.10.79 US 86672**

(43) Date of publication of application:
**29.04.81 Bulletin 81/17**

(45) Publication of the grant of the patent:
**06.07.83 Bulletin 83/27**

(84) Designated Contracting States:
**CH DE FR GB IT LI NL**

(56) References cited:
**DE - C - 697 440**
**FR - A - 472 826**
**FR - A - 746 392**
**FR - A - 1 528 103**
**FR - A - 2 056 941**
**US - A - 3 278 310**
**US - A - 3 278 313**

(73) Proprietor: **Bily, Robert Raymond**
**10048 Bon Vista Court**
**San Jose California 95127 (US)**

(72) Inventor: **Bily, Robert Raymond**
**10048 Bon Vista Court**
**San Jose California 95127 (US)**

(74) Representative: **Ellis-Jones, Patrick George Armine**
**J.A. KEMP & CO. 14 South Square Gray's Inn**
**London WC1R 5EU (GB)**

---

Courier Press, Leamington Spa, England

## Process of manufacturing cheese

This invention relates to the manufacture of cheese. It is important to control the manufacture of cheese so as to yield as much cheese as possible from the milk, for obvious economic reasons, especially as cheese production involves a substantial amount of energy.

Also an increased yield reduces the amount of whey i.e. the serum or watery part of milk that separates from the curds, which is left after the cheese is formed. Few uses have been found for whey and it is frequently disposed of through the sewage waste system; by reducing the amount of whey there is a corresponding reduction in pollution.

The unused organic nutrients make whey a costly pollutant; biological oxygen demand (BOD) values for cottage cheese wheys range from 30,000 to 45,000 mg/l. 1,000 gallons (3785 litres) of raw whey discharged into a sewage treatment plant has been calculated to equal the load normally imposed by 1,800 people.

This oxygen-demanding effluent is partially passed into rivers and streams because removal is usually not complete in sewage treatment plants. Every 1,000 litres of raw whey discharged requires the dissolved oxygen in over 4,500,000 litres of water for its oxidation.

There is an estimated 35.8 billion pounds (16.2 billion kg) of fluid whey available for processing in the United States and 70 billion pounds (31.7 billion kg) of whey available worldwide. With an average decrease of whey production worldwide of 1%, as is possible in accordance with this invention, whey production could be decreased by 700 million pounds (317 million kg) worldwide.

Whey can be processed and used as animal food or fertilizer, but such processes have not been successful.

The present invention provides a process for increasing the yield of cheese from milk without adversely affecting the taste and edibility of the cheese. The present invention provides a process for producing cheese from milk, characterised by incorporating in the milk from 0.001 to 0.15% by weight of lecithin before any curd in the milk, precipitates, precipitating the curd from the mixture of lecithin and milk and separating the curd from the resulting whey.

Cheese production involves a number of steps. Conventionally, milk is placed in a vat and heated to an appropriate temperature. A starter is added to ripen the milk and after an appropriate time, rennet extract or milk-coagulating catalyst is mixed in to initiate the coagulation process unless the milk is set with starter only. The amount of milk, starter and rennet extract or coagulating catalyst is closely controlled as are many other ingredients which can be added for various purposes. The resulting mixture is allowed to stand until a curd forms. The curd is then cut and cooked prior to draining or dipping, knitting, salting etc. After coagulation, the cheese is separated from the whey.

It has been found that the addition of carefully controlled amounts of lecithin increases the yield of cheese from a standard quantity of milk. If too little lecithin is added, the increase in yield of cheese is very small. If too much lecithin is added, there results a degradation in the quality of the cheese, especially as to taste and texture.

The increase in yield will vary depending upon the yield characteristics of the cheese being manufactured. The latter are determined by the percentage of fat and moisture in the finished cheese, higher fat and higher moisture cheeses are produced in greater quantities from a given quantity of milk than lower fat and lower moisture cheeses. Obviously, higher fat cheeses are generally made from higher fat milk. When a given quantity of lecithin is added to a given quantity of milk used for higher fat and/or moisture cheeses prior to coagulation, the percentage increase in yield is greater than if the same quantity is added to the milk used for lower fat and/or moisture cheeses. Therefore, a milk that yields normally about 9 percent cheese may yield 9.35 percent in cheese with lecithin; a milk that yields 11 percent cheese normally yields 11.6 percent cheese with lecithin and a milk that yields 15 percent normally will yield 16.5 percent with lecithin. The increase in yield resulting from the addition of lecithin is generally from 3 to 10%.

Lecithin is a natural mixture of phospholipids or phosphatides derived from vegetable or animal sources. Preferably oil-free powdered lecithin is used, especially the phospholipid complex derived from soya beans. Liquid lecithin is less preferred because it does not mix well with milk, possibly due to the high soy oil content remaining. The process can therefore become very messy, difficult to control and tends to result in large quantities of wasted lecithin.

The addition of lecithin to cheese after curd formation is known but not for increasing the yield or reducing the quantity of whey. Thus Australian Patent 10,/45/33 discloses adding lecithin to cheese after it has been formed to reduce cracks, cleavages and excessively large pores.

Good results can be obtained by adding 0.001 to 0.066% of lecithin by weight to the milk. As the amount of lecithin is increased from 0.001 to 0.045%, a progressively higher yield of cheese from a predetermined amount of milk can be attained without undesirable side effects. Yield increases without negative side effects are generally maximised from 0.045 to 0.066% by weight of lecithin. Cheese with higher fat generally gives slightly better yields with lecithin in the higher end of the range (0.066%) while cheese of lower fat generally gives the best yields with the addition in the lower end of the range (0.045%).

Increasing the amount of lecithin further to 0.15% by weight of the milk increases the cheese yield further in most instances but the cheese tends to suffer. For instance, many such cheeses exhibit an off-flavour quality and are extremely soft in body and texture. In some cheeses some lecithin separates out and pools at the bottom of the cheese form to render the cheese less useful. Furthermore, the value of the increased yield of cheese is generally not significantly greater than the cost of the additional lecithin added to the process.

Some cheeses made up with up to 0.15% lecithin by weight of the milk have been allowed to age to determine if the adverse flavour in the cheese disappeared. The adverse flavour did not disappear in most cheeses. However, sharper tasting cheeses developed an interesting and perhaps acceptable flavour, although different from what is normally expected. In most cheeses the body and texture obtained with these higher amounts of lecithin are progressively more difficult to control; but low moisture cheeses can be made effectively. Some cheeses were manufactured with the addition of 0.175% by weight lecithin but these were without body and texture.

In conclusion therefore, lecithin may be added in an amount from 0.066 to 0.15% by weight of the milk prior to curd formation if flavour and/or texture is not of critical importance, i.e. for cheese that will be further processed, flavoured or mixed with other ingredients.

To increase cheese yield, the lecithin must be added prior to the coagulation of the milk into cheese curd. Most cheeses of the world are formed from one of three distinct curd precipitation patterns. In soft acid cheeses such as cottage or cream, precipitation occurs at room temperature in 5 to 16 hours as a result of an acid, usually lactic, exerting an effect on the casein. For cheese such as Swiss, cheddar or mozzarella, precipitation occurs at elevated room temperature in 30—45 minutes as a result of rennin (or suitable substituted) action. A third precipitation form, restricted mainly to ricotta cheese, utilizes a combination of high heat and medium acidity, e.g. pH 6.0, to partly dehydrate protein particles and precipitate the curd.

The following Examples further illustrate the present invention.

### Example 1

In the preparation of part skim low moisture mozzarella cheese, vat one was the control vat and vat two was the vat containing lecithin. Milk for both vats was drawn from the same holding tank; it was pasteurised at 161.6°F (72°C) for 16 seconds, cooled to 90°F (32°C) and pumped into identical Damrow Double O vats. Samples of milk were tested for the percentage of fat, percentage of protein and percentage of total solids. In this particular test, milk in vat one was found to contain 1.77% fat, 3.15% protein and 10.54% total solids and in vat two 1.78% fat, 3.10% protein and 10.44% total solids. Since this milk had not been homogenised, slight variations in lab analysis are to be expected in different samples taken from the same holding tank, although these milks are considered similar for production purposes.

Vat one was filled with 4,860 gallons; 18,400 litres or 41,796 lbs or 18,960 kg of pasteurised milk. After 15 minutes, 140 gallons (530 litres) of bulk starter were added to vat one. Forty minutes later, the milk was ready for the addition of a milk coagulating catalyst; namely 5 gallons (18.9 litres) of a diluted microbial enzyme, mucor miehei mixed in a ratio of 68 ounces (1928 g) of enzyme to 5 gallons (18.9 litres) of water. The milk was agitated for 5 minutes and the vat covered. After 30 minutes the curd in vat one was cut and allowed to remain undisturbed in the whey for approximately 15 minutes with only periodic gentle agitation. The curd was then cooked to 110°F (54°C) in 35 minutes with slow mechanical agitation. The curds and whey were pumped onto an automatic Damrow DMC belt where the curd was drained, matted and cheddared prior to being mechanically stretched in a cooker/moulder (Stainless Steel Fabricating Company).

The cheese curd was carefully segregated throughout to ensure taht the curd from the control vat was isolated at all times. When the curd blocks were properly acid-ripened, they were milled (cheddared) and mechanically stretched in heated water at a temperature of 170°F (77°C). The cheese was then removed from the moulder as 5 lb (2.25 kg) loaves and placed in stainless steel forms to coalesce. The forms were then placed in cold water until the body was firm; the cheese was then removed and placed in brine tanks for salting. After all the curd from one vat had been removed from the DMC belt, the cooker/moulder machines were broken down to remove all remaining curd left inside. This cheese was then processed as before and added to the rest of the cheese from vat one. All cheese from vat one was carefully segregated in its own brine tank and allowed to cure for the specified time. This cheese was then packaged, boxed and weighed (3,406 lbs; 1545 kg). The cheese was then placed under refrigeration at 40°F (4.4°C).

Vat two was filled while vat one was filling. 17½ lbs (7.9 kg) of pure powdered lecithin were mixed slowly into a small body of milk that was being run through a reciprocal pump under strong pressure until the lecithin was thoroughly incorporated into the milk. The mixture was then pumped into vat two for further mixing with the main body of milk. Vat two continued to fill to 4,860 gallons (18,400 litres) or 41,796 pounds (18,960 kg) of milk i.e. lecithin concentration about .042%. After 15 minutes 140 gallons (530 litres) of starter were added and 35 minutes later 5 gallons (18.9 litres) of the diluted milk coagulating enzyme, mucor miehei was added. The batch was cut after 30 minutes and processed as for control vat one. Yield 3,528 pounds (1,600 kg) i.e. an increase of 3.58%.

Samples of cheese from both vats were tested for fat, moisture and total solids content, pH and percentage of protein.

The following results were obtained from several samples:—

|  | Sample Cheese from Vat One without Lecithin | Sample Cheese from Vat Two with Lecithin added |
|---|---|---|
| % Fat | 16.47 | 15.39 |
| % Fat Dry Basis | 32.83 | 30.51 |
| % Total Solids | 50.17 | 50.45 |
| % Moisture | 49.83 | 49.55 |
| pH | 05.40 | 05.40 |
| % Protein | 27.85 | 28.18 |

The values are thus similar apart from fat content. No explanation was reached for this difference. Since milk coagulation involves the precipitation of milk protein, colloidal chemistry is obviously involved. Cheese yield is dependent upon the recovery of fat and casein by the curd during cheesemaking and by the composition of the milk and the moisture content of the final cheese. Lecithin is, of course, a valuable colloid, emulsifier and water binder.

Subsequent tests confirmed these results as did similar tests run in another cheese factory.

### Example 2

Two vats of cottage cheese were made. In this skim milk was fortified with low heat extra grade skim milk powder to a level of 11% total solids. One-half of the batch was used as a control and to the other half was added .045 percent lecithin powder. The batches were set and, after they reached the proper acidity, The curd was cut and cooked. The whey was then drained off, the curd was washed and drained and the drained curd was then weighed for each vat. The sample with lecithin produced more cheese curd than the control. The yield was determined by dividing the weight of the finished curd by the weight of the solids in the milk. The yield for the control vat was 1.74 and that for the lecithin vat 1.91. Samples were tested for percentage of moisture, percentage of fat, percentage of total solids, percentage of protein and pH; the results were the same for both cheeses. Due to the high moisture and low fat characteristics of cottage cheese, no difference in fat content was apparent.

Other tests confirmed these results. In some of the tests the milk with lecithin was pasteurised and homogenised to guarantee full incorporation of the lecithin with the milk. With this procedure the skim milk was adjusted to 11% total solids and split into two batches. The control batch was pasteurised and homogenised at 2500 lbs/sq inch (175 kg/cm$^2$). The batch with .045% lecithin added was pasteurised and homogenised after the addition. The cheesemaking process was followed exactly as described above; the yield for the batch with lecithin was again higher than for the control.

In these tests representative yields were as follows: Control batch 1.71 and batch with lecithin 1.87. The percentage increase in yield resulting from the addition of lecithin averaged approximately 9.57%.

All cheese samples made in all cheese factories were tested by a flavour panel at room temperature and also directly out of refrigeration. No significant difference was found between the products that had lecithin and those that did not. Cheeses such as mozzarella that were heated on top of a pizza crust exhibited better flavour with lecithin than without. Furthermore, cheeses made with lecithin used in cooking exhibited better melting characteristics and resistance to browning. It was also found that the lecithin cheeses could be frozen and thawed without the usual resultant moisture loss. It is believed that the flavour is preserved during cooking or freezing by the addition of lecithin because moisture loss is reduced and flavour loss is often related to moisture loss. The addition of the lecithin can also result in the cheese having increased nutritional value. It is also generally easier to slice, separate, grate, dice, and grind and has exhibited shelf life.

In all experiments conducted, the resultant whey remaining after the curd had formed did possess a lecithin flavour and feel. The whey was very smooth to the touch. These attributes indicate that not all the lecithin is absorbed by the cheese curd. The lecithin can thus be added to the milk in its raw state prior to pasteurisation and/or homogenisation, or to the milk after it has been prepared with starter but prior to precipitation of the curd. In fact it can be added at any point from the raw state to the point at which the milk precipitates into cheese curd.

## Claims

1. A process for producing cheese from milk characterised by incorporating in the milk from 0.001 to 0.15% lecithin by weight of the milk before any curd precipitation in the milk, precipitating the curd from the mixture of the lecithin and milk and separating the curd from the resulting whey.

2. A process according to claim 1 characterised in that the milk and the lecithin are homogenised before curd formation.

3. A process according to claim 1 characterised in that the milk and lecithin are pasteurised before curd formation.

4. A process according to any one of claims 1 to 3 characterised in that the lecithin is in the form of a substantially oil-free powder.

5. A process according to any one of claims 1 to 4 characterised in that the lecithin is incorporated in an amount from 0.001 to 0.066% by weight.

6. A process according to claim 5 characterised in that the lecithin is incorporated in an amount from 0.045 to 0.066% by weight.

## Revendications

1. Procédé pour la préparation de fromages à partir de lait, caractérisé par le fait que l'on incorpore dans le lait de 0,001 à 0,15% de lécithine en poids par rapport au lait avant toute précipitation de lait caillé dans le lait, que l'on précipite le lait caillé du mélange de lécithine et de lait et que l'on sépare le lait caillé du petit-lait résultant.

2. Procédé selon la revendication 1, caractérisé par le fait que le lait et la lécithine sont homogénéisés avant la formation du lait caillé.

3. Procédé selon la revendication 1, caractérisé par le fait que le lait et la lécithine sont pasteurisés avant la formation du lait caillé.

4. Procédé selon l'une quelconque des revendications 1 à 3, caractérisé par le fait que la lécithine est sous la forme d'une poudre essentiellement exempt d'huille.

5. Procédé selon l'une quelconque des revendications 1 à 4, caractérisé par le fait que la lécithine est incorporée en une quantité de 0,001 à 0,066% en poids.

6. Procédé selon la revendication 5, caractérisé en ce que la lécithine est incorporé en une quantité de 0,045 à 0,066% en poids.

## Patentansprüche

1. Verfahren zur Herstellung von Käse aus Milch, dadurch gekennzeichnet, daß in die Milch 0,001 bis 0,15 Gew.-% Lecithin bezogen auf die Milch vor jeglichem Klumpen-Niederschlag in der Milch eingebracht werden, der Käsebruch aus dem Gemisch des Lecithins und der Milch niedergeschlagen wird und der Käsebruch von der erhaltenen Molke abgetrennt wird.

2. Verfahren nach Anspruch 1, dadurch gekennzeichnet, daß die Milch und das Lecithin vor der Käsebruchbildung homogenisiert werden.

3. Verfahren nach Anspruch 1, dadurch gekennzeichnet, daß die Milch und das Lecithin vor der Käsebruchbildung pasteurisiert werden.

4. Verfahren nach einem der Ansprüche 1 bis 3, dadurch gekennzeichnet, daß das Lecithin in der Form eines im wesentlichen ölfreien Pulvers vorliegt.

5. Verfahren nach einem der Ansprüche 1 bis 4, dadurch gekennzeichnet, daß das Lecithin in einer Menge von 0,001 bis 0,066 Gew.-% eingebracht wird.

6. Verfahren nach Anspruch 5, dadurch gekennzeichnet, daß das Lecithin in einer Menge von 0,045 bis 0,066 Gew.-% eingebracht wird.